# EUROPÄISCHE PATENTSCHRIFT

(11) **EP 0 306 898 B1**
(45) Veröffentlichungstag und Bekanntmachung des Hinweises auf die Patenterteilung: **26.05.1993**
(21) Anmeldenummer: 88114532.0
(22) Anmeldetag: 06.09.1988
(51) Int. Cl.: H04M 1/11

(54) **Verbindungsblech zur mechanischen Verbindung von mehreren nebeneinander angeordneten nachrichtentechnischen Geräten**
Assembly plate for the mechanical connection of several telecommunication appliances arranged side by side
Plaque d'assemblage pour la liaison mécanique de plusieurs appareils de télécommunication disposés côte à côte

(30) Priorität: 09.09.1987 DE 8712232 U
(43) Veröffentlichungstag der Anmeldung: 15.03.1989
(73) Patentinhaber: SIEMENS AKTIENGESELLSCHAFT, 80333 München (DE)
(72) Erfinder: Hundseder, Max, Dipl.-Ing., D-8039 Puchheim (DE); Otto, Peter, Dr.-Ing., D-8000 München 60 (DE)

(56) Entgegenhaltungen:
- GB-A- 1 239 698
- US-A- 4 100 379
- US-A- 4 549 776

## Beschreibung

Die vorliegende Erfindung beinhaltet ein Verbindungsblech zur mechanischen Verbindung von mehreren nebeneinander angeordneten nachrichtentechnischen Geräten, insbesondere Fernsprechgeräten, das mit Ansätzen in taschenförmige Aufnahmen in der Bodenwanne der Geräte einschiebbar ist und in Führungen an der Bodenwanne gehaltert ist, wobei an der Bodenwanne keilförmig Rastnasen vorgesehen sind, die im verbundenen Zustand der Geräte in Ausnehmungen in dem Verbindungsblech verrastend eingreifen.

Ein solches Verbindungsblech ist z.B. durch die US-A-4 100 379 bekannt.

Derartige Verbindungsbleche sind bereits als Tragschienen bekannt, in denen Haken angeordnet sind, die in Taschen der Bodenwanne eingreifen, wobei in der jeweiligen Tragschiene eine Leiterplatte eingebettet ist, die über Kontaktbahnen und in den Geräten befindliche Kontaktelemente die elektrische und mechanische Verbindung der Geräte in einem Kopplungsvorgang herstellt. Derartige Schienen haben jedoch den Nachteil, daß sie relativ aufwendig aufgebaut sind und daher nicht kostengünstig zu fertigen sind.

Es sind weiterhin Verbindungsbleche bekannt, die mit ihren Längsseiten in durch Stege gebildete und in den Aufnahmen jeweils seitlich angeordneten Führungsnuten einschiebbar sind, wobei das Verbindungsblech mit Ausnehmungen versehen ist, die mit in der jeweiligen Aufnahme angeordneten Nasen eine Rastverbindung eingehen und wobei in der Fluchtlinie mit diesen Ausnehmungen liegend in deren Randbereiche Lappen herausgebogen sind, die im eingeschobenen Zustand von der jeweiligen Bodenwanne wegweisen.

Aufgabe der vorliegenden Erfindung ist es, eine weitere Verbindung zwischen nachrichtentechnischen Geräten aufzuzeigen, die außer einer schnellen Verbindungsmöglichkeit die Kosten bezüglich der Herstellung des Verbindungsbleches weiter reduziert.

Diese Aufgabe wird dadurch gelöst, daß das Verbindungsblech gabelförmig gestaltet ist und an zwei parallel zueinander verlaufenden und durch eine Basis verbundenen Armen jeweils an beiden Armenden einen räumlich zueinander versetzten Ansatz aufweist, daß an der anderen seite der Basis ein weiterer senkrecht und mittig zur Basis verlaufender Arm einen in seiner Längsachse und an seinem freien Ende befindlichen Ansatz besitzt, wobei die an der Bodenwanne angeordneten, als Führungsrippen gestalteten Führungen jeweils einen T-förmigen Querschnitt aufweisen, die in einer Fluchtlinie zueinander verlaufen und einmal jeweils Aufnahmen für die zueinander weisenden Randbereiche der parallelen Arme und zum anderen für die beiden Randbereiche des weiteren Armes bilden.

Dadurch, daß zur Verbindung der nachrichtentechnischen Geräte untereinander nur noch ein einziges Verbindungsblech benötigt wird, daß in die einheitlich ausgebildeten Bodenwannen der einzelnen Geräte verrastend eingebracht werden kann, lassen sich die Herstellungskosten für die sonst üblichen vielfaltigen Verbindungsbleche wesentlich reduzieren. Die beim Einschieben des Verbindungsbleches erforderliche Führung erfolgt in diesem Fall einmal durch die in einer Fluchtlinie befindlichen und in der Bodenwanne angeordneten Führungen T-förmigen Querschnitts, wobei die endgültige Verbindung der Geräte untereinander durch die an der Bodenwanne vorgesehenen keilförmigen Rastnasen erfolgt, die in die Ausnehmungen im Verbindungsblech eingreifen. Zweckmäßigerweise werden diese Rastnasen an der Bodenwanne so vorgesehen, daß sie in Steckrichtung gesehen gegenläufig zueinander angeordnet sind.

Die Erfindungsoll im folgenden anhand eines Ausführungsbeispieles näher erläutert werden.

Es zeigt
FIG 1 mehrere mittels Verbindungsblechen zusammengefügte nachrichtentechnische Geräte,
FIG 2 zwei miteinander verbundene nachrichtentechnische Geräte in einer teilweise geschnittenen Seitenansicht,
FIG 3 das Verbindungsblech in einer Aufsicht.

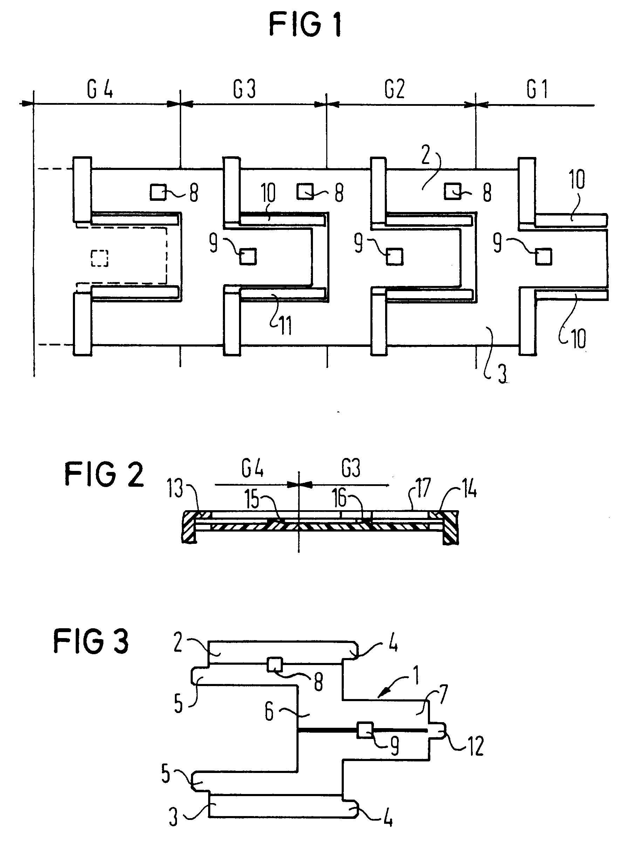

Das zur Verbindung nachrichtentechnischer Geräte dienende Verbindungsblech 1 ist gabelförmig gestaltet. Wie aus FIG 3 erkennbar ist, besitzt das Verbindungsblech jeweils an seinen beiden parallel zueinander verlaufenden Armen 2 und 3 räumlich zueinander versetzte Ansätze 4 und 5. Die beiden Arme 2 und 3 sind über die Basis 6 miteinander verbunden. Senkrecht und mittig zu dieser Basis 6 verläuft der Arm 7, der ebenfalls einen in seiner Längsachse und an seinem freien Ende befindlichen Ansatz 12 aufweist. Das Verbindungsblech weist ferner in seinen Armen 2 und 7 Ausnehmungen 8 und 9 quadratischen Querschnitts auf.

Wie aus FIG 1 zu ersehen ist, sollen mittels eines einheitlich gestalteten Verbindungsbleches 4 nachrichtentechnische Geräte mechanisch untereinander verbunden werden. Zu diesem Zweck besitzen die Geräte G1, G2, G3 und G4 im Bereich ihrer Bodenwannen 17 jeweils Führungsrippen 10 und 11 T-förmigen Querschnitts, die in einer Fluchtlinie zueinander verlaufen und einmal jeweils Aufnahmen für die zueinander weisenden Randbereiche der Arme 2 und 3 und zum anderen für die beiden Randbereiche des Armes 7 bilden.

Wie aus FIG 3 ersichtlich, greifen beim Verbinden der nachrichtentechnischen Geräte untereinander die Ansätze 4 und 5 bzw. 12 der Arme 2 und 3 bzw. 7 in taschenförmige Aufnahmen 13 bzw. 14 in der Bodenwanne 17 der einzelnen Geräte ein. An der jeweiligen Bodenwanne 17 der einzelnen Geräte sind gegenläufig gerichtete Rastnasen 15 und 16 angeordnet, die in die Ausnehmungen 8 und 9 verrastend eingreifen und somit ein Trennen der einzelnen Geräte G1, G2, G3 und G4 verhindern.

## Patentansprüche

1. Verbindungsblech (1) zur mechanischen Verbindung von mehreren nebeneinander angeordneten nachrichtentechnischen Geräten (G1, G2, G3, G4), insbesondere von Fernsprechgeräten, das mit Ansätzen (4, 5, 12) in taschenförmige Aufnahmen (13, 14) in der Bodenwanne (17) der Geräte (G1, G2, G3, G4) einschiebbar ist, und in Führungen (10, 11) an der Bodenwanne (17) gehaltert ist, wobei an der Bodenwanne (17) keilförmige Rastnasen (15, 16) vorgesehen sind, die im verbundenen Zustand der Geräte (G1, G2, G3, G4) in Ausnehmungen (8, 9) in dem Verbindungsblech (1) verrastend eingreifen, **dadurch gekennzeichnet,** daß das Verbindungsblech (1) gabelförmig gestaltet ist und an zwei parallel zueinander verlaufenden und durch eine Basis (6) verbundenen Armen (2, 3) jeweils an beiden Armenden einen räumlich zueinander versetzten Ansatz (4; 5) aufweist, daß an der anderen seite der Basis ein weiterer senkrecht und mittig zur Basis (6) verlaufender Arm (7) einen in seiner Längsachse und an seinem freien Ende befindlichen Ansatz (12) besitzt, wobei die an der Bodenwanne (17) angeordneten, als Führungsrippen (10, 11) gestalteten Führungen jeweils einen T-förmigen Querschnitt aufweisen, die in einer Fluchtlinie zueinander verlaufen und einmal jeweils Aufnahmen für die zueinander weisenden Randbereiche der parallelen Arme und zum anderen für die beiden Randbereiche des weiteren Armes bilden.

2. Verbindungsblech nach Anspruch 1, **dadurch gekennzeichnet**, daß die Rastnasen (15, 16) an der Bodenwanne (17) in Steckrichtung gegenläufig angeordnet sind.

## Claims

1. Connecting plate (1) for mechanically connecting a plurality of juxtaposed telecommunication units (G1, G2, G3, G4), in particular of telephone units, which plate can be inserted by means of tabs (4, 5, 12) into pocket-shaped receptacles (13, 14) in the base trough (17) of the units (G1, G2, G3, G4), and is held in guides (10, 11) on the base trough (17), there being provided on the base trough (17) wedge-shaped catch noses (15, 16) which in the connected state of the units (G1, G2, G3, G4) engage in a latching fashion in openings (8, 9) in the connecting plate (1), characterised in that the connecting plate (1) is configured in the shape of a fork and has in each case on both arm ends of two arms (2, 3) extending parallel to one another and connected by a base (6) mutually spatially offset tabs (4; 5), in that on the other side of the base a further arm (7) extending perpendicularly and centrally relative to the base (6) has a tab (12) located on its longitudinal axis and at its free end, the guides arranged on the base trough (17) and configured as guide ribs (10, 11) in each case having a T-shaped cross-section which extend in line with one another and respectively form receptacles for the edge regions, pointing towards one another, of the parallel arms, on the one hand, and for the two edge regions of the other arm, on the other hand.

2. Connecting plate according to Claim 1, characterised in that the catch noses (15, 16) are arranged on the base trough (17) in opposite directions in the insertion direction.

## Revendications

1. Plaque d'assemblage (1) servant à relier mécaniquement plusieurs appareils (G1,G2,G3,G4) de la technique de transmission d'informations, disposés côte-à-côte, notamment des postes téléphoniques, et qui peut être insérée par des parties saillantes (4,5,12) dans des logements en forme de poches (13,14) ménagés dans la cuvette formant le fond (17) des appareils (G1,G2,G3,G4) et qui est retenue dans des glissières (10,11) présents dans la cuvette formant le fond (17), et dans laquelle dans la cuvette de fond (17) sont prévus des ergots d'encliquetage en forme de coins (15,16), qui pénètrent avec encliquetage dans des évidements (8,9) ménagés dans la plaque d'assemblage (1), lorsque les appareils (G1,G2,G3,G4) sont reliés, caractérisée par le fait que la plaque d'assemblage (1) est en forme de fourche et comporte des parties saillantes (4;5) décalées l'un par rapport à l'autre dans l'espace et situés respectivement sur les deux extrémités de deux bras parallèles (2,3) et reliés par une base (6), que, de l'autre côté de la base, un autre bras (7) perpendiculaire au centre à la base (6) possède un partie saillante (12) qui s'étend dans l'axe longitudinal du bras et qui est à l'extrémité libre de ce bras, et que les glissières, qui sont disposés sur la cuvette formant le fond (17) et conformées en nervures de guidage (10,11), ont une section transversale en forme de T, sont alignées et forment d'une part des logements pour les zones marginales, qui sont dirigées l'une vers l'autre, des bras parallèles et d'autre part pour les deux zones marginales de l'autre bras.

2. Plaque d'assemblage suivant la revendication 1, caractérisée par le fait que les ergots d'encliquetage (15,16) sont disposés sur la cuvette formant le fond (17) en étant sont dirigés dans des directions d'enfichage opposées.
